# EUROPÄISCHE PATENTSCHRIFT

(11) **EP 2 706 157 B1**
(45) Veröffentlichungstag und Bekanntmachung des Hinweises auf die Patenterteilung: **15.11.2017**
(21) Anmeldenummer: 13183730.4
(22) Anmeldetag: 10.09.2013
(51) Int. Cl.: E03F 1/00, F16K 15/14

(54) **Rückflussventil eines Unterdruckabwassersystems**
Check-valve for a vacuum waste water system
Dispositif anti-retour d'un système d'eaux usées à dépression

(30) Priorität: 10.09.2012 DE 102012108429
(43) Veröffentlichungstag der Anmeldung: 12.03.2014
(73) Patentinhaber: Roediger Vacuum GmbH, 63450 Hanau (DE)
(72) Erfinder: BETZ, Reinhold, 21255 Tostedt (DE)
(74) Vertreter: Stoffregen, Hans-Herbert

(56) Entgegenhaltungen:
- EP-A1- 1 255 065
- EP-A2- 0 653 524
- SE-B- 320 240
- US-A- 3 931 831
- US-B1- 6 397 874

## Beschreibung

Die Erfindung bezieht sich auf eine Einrichtung nach dem Oberbegriff des Anspruchs 1.

Eine Rückstaueinrichtung der bekannten Art ist in US 6 397 874 B1 beschrieben. Die bekannte Rückstaueinrichtung ist als Rückstauventil ausgebildet und umfasst einen Ventilkörper, der mit einer stromabwärts gelegenen Vakuumquelle verbunden ist. Der Ventilkörper umfasst einen ersten Leitungsabschnitt mit einem stromaufwärts gelegenen Abschnitt und einem stromabwärts gelegenen Abschnitt und einen zweiten Leitungsabschnitt, der sich von dem ersten Leitungsabschnitt zwischen dem stromaufwärts gelegenen Abschnitt und dem stromabwärts gelegenen Abschnitt erstreckt und mit dem stromaufwärts gelegenen Abschnitt einen spitzen Winkel bildet, wobei eine stirnseitige Öffnung des zweiten Leitungsabschnittes mit einer randseitigen Öffnung des ersten Leitungsabschnitts zur Bildung einer Strömungsöffnung korrespondiert.

In dem Ventilkörper ist eine Ventilklappe schwenkbar angeordnet, wobei die Ventilklappe in einer ersten Position in einen ersten Ventilsitz in einer Strömungsöffnung des ersten Leitungsabschnitts eingreift und wobei die Ventilklappe in einer zweiten Position in einen zweiten Ventilsitz der Strömungsöffnung des zweiten Leitungsabschnitts eingreift.

Die Ventilklappe schwenkt in die zweite Position und verhindert einen Rückstau bzw. Rückfluss in dem zweiten Leitungsabschnitt, wenn Abwasser von dem stromaufwärts gelegenen Abschnitt des ersten Leitungsabschnitts zu dem stromabwärts gelegenen Abschnitt des ersten Leitungsabschnitts strömt. Die Ventilklappe bewegt sich in die erste Position und verhindert einen Rückfluss in den stromaufwärts gelegenen Abschnitt des ersten Leitungsabschnitts, wenn Abwasser aus dem zweiten Leitungsabschnitt zu dem stromabwärts gelegenen Abschnitt des ersten Leitungsabschnitts fließt.

Bei der bekannten Ausführungsform ist die Ventilklappe schwenkbar gelagert in dem Ventilkörper angeordnet, wobei an der starren Ventilklappe ein Scharnier angeordnet ist, durch das ein Drehbolzen geführt ist, der in einem Lager abgestützt ist. Die Ventilklappe ist als starre ovale Scheibe ausgebildet.

Die Lagerung der Ventilklappe mittels Scharnier und Bolzen ist aufwendig und wartungsintensiv. Bei einem Bruch des Lagerbolzens ist nicht ausgeschlossen, dass die starre Ventilklappe über die Unterdruckleitung in die Vakuumstation abgesaugt wird und in nachgeordneten Einrichtungen wie Pumpen Schaden anrichten kann.

Die US 3 931 831 B1 bezieht sich auf ein Klappenventil mit elastischer Klappe und Verfahren zur Herstellung einer solchen. Dabei ist vorgesehen, dass eine langgestreckte dünne flexible Membran an einen Innenwandabschnitt eines Leitungsrohrs angepasst und mit der Innenwand des Leitungsabschnitts verbunden wird. Die Membran weist einen Abschnitt auf, der bei Strömungsdruck die Strömung nur in eine Richtung zulässt. Bei dieser Ausführungsform wird die flexible Membran mit einem umlaufenden Rand in einen Schrägschlitz des Leitungsabschnitts eingelegt. Zur Fixierung der Membran wird über den die flexible Membran aufweisenden Leitungsabschnitt eine Polyurethan-Muffe geschoben, die sodann an den Leitungsabschnitt angeformt wird.

In der EP 1 255 065 A1 wird eine Rückstau-Einrichtung gemäss dem Oberbegriff des Anspruchs 1 offenbart. Diese Rückstau-Einrichtung wird als ein Ventilmittel für ein Strömungsrohr beschrieben, wobei das Ventilmittel einen zylindrischen Körperabschnitt mit einer Länge aufweist, die länger als die Ausdehnung einer Strömungsöffnung in dem Strömungsrohr ist. Der Körperabschnitt ist mit dem Strömungsrohr mittels Verbindungsmittel befestigbar, wobei die Verbindungsmittel erste Flanschmittel umfassen, die sich in einer ersten Richtung des Strömungsrohrs erstrecken und zweite Flanschmittel, die sich in entgegen gesetzter Richtung erstrecken und mit dem zylindrischen Körperabschnitt verbunden sind. Der zylindrische Körperabschnitt ist aus einer flexiblen Struktur hergestellt um eine Ventilfunktion bereitzustellen.

In der SE 320 240 B ist ein Rückstauventil beschrieben, welches im Verlauf eines ersten Leitungsabschnittes angeordnet ist, welcher über Flansche in eine Abwasserleitung einschleifbar ist. In dem Leitungsabschnitt ist das Rückstauventil in Form einer flexiblen Membran angeordnet, wobei die Membran als ein zylinderförmiger Schlauchabschnitt ausgebildet ist, welcher mittels eines Flansches in den Leitungsabschnitt selbst oder in einem von dem Leitungsabschnitt abzweigenden Leitungsabschnitt befestigt ist.

Dabei wird ein umlaufender Rand der flexiblen Membran mit einem Flansch in einer stirnseitigen Öffnung des Leitungsabschnitts fixiert, mit der Folge, dass der Leitungsabschnitt strömungstechnisch durch den die Membran fixierenden Flansch abgesperrt ist.

In der EP 0 653 524 A2 ist ein Unterdruckabwassersystem beschrieben, umfassend ein Mittel zur Erzeugung von Vakuum zum Erzeugen eines Niederdrucks zum Transport von Abwasser in einem Unterdruckabwassersystem. Das System weist auch eine Abzweigung mit einem integrierten Rückstauelement auf, wobei das Rückstauelement als flexible Gummiplatte ausgebildet ist.

Davon ausgehend liegt der vorliegenden Erfindung die Aufgabe zu Grunde, eine Rückstaueinrichtung der eingangs genannten Art derart weiterzubilden, dass der Wartungsaufwand minimiert, die Funktionssicherheit erhöht und die Herstellung vereinfacht wird.

Die Aufgabe wird erfindungsgemäß durch die Merkmale des Anspruchs 1 gelöst. Der erste Randabschnitt der Membran wird dabei in einem schräg verlaufenden Schlitz angeordnet und durch Verschweißen eines umlaufenden äußeren Randes des Schlitzes fixiert. Der Schlitz ist als ein Schrägschnitt ausgebildet, ausgehend von einer bezogen auf den Strömungsquerschnitt stromaufwärts gelegenen Position zu einer bezogen auf den Strömungsquerschnitt stromabwärts gelegenen Position, wobei die stromabwärts gelegene Position auf der Mittelachse des ersten Leitungsabschnitts liegt. Der erste und zweite Leitungsabschnitt besteht vorzugsweise aus Polyethylen (PE).

Durch die Befestigung des Randbereichs der flexiblen Membran entlang einer - bezogen auf die Mittelachse - schräg verlaufenden Linie in Verbindung mit der gegenüber der lichten Weite des Leitungsabschnitts vergrößerten Quererstreckung wird erreicht, dass die Membran entlang der schräg verlaufenden Linie durch die Strömungskraft des Fluids aus der ersten Position in die zweite Position und umgekehrt gefaltet wird. Aufgrund der Eigenspannung des Materials verbleibt die Membran in der jeweiligen Position.

In einer bevorzugten Ausführungsform ist vorgesehen, dass die Linie einer Schnittlinie eines bis etwa zur Mittelachse des ersten Leitungsabschnitts verlaufenden Schrägschnitts entspricht.

Dabei ist vorgesehen, dass der Schrägschnitt einen spitzen Winkel β im Bereich von 15° ≤ β ≤ 45°; vorzugsweise β = 20°, zur Längsachse des ersten Leitungsabschnitts einschließt.

In bevorzugter Ausführungsform ist vorgesehen, dass die flexible Membran eine im Wesentlichen U-förmige Fläche aufweist.

Eine weitere bevorzugte Ausführungsform sieht vor, dass die flexible Membran aus einem Material wie Silicon oder Gummi, vorzugsweise Ethylen-Propylen-Dien-Kautschuk (EPDM) ausgebildet ist. Dadurch ist sichergestellt, dass bei einem Abreißen der Membran diese in nachfolgenden Pumpeinrichtungen Schaden nicht anrichtet.

Um einen optimalen Verschluss des ersten Leitungsabschnitts zu erreichen, ist vorgesehen, dass die Membran in einer Querschnittsebene eine Quererstreckung aufweist, die jeweils einem Umfangsabschnitt des ersten Leitungsabschnittes in derselben Querschnittsebene entspricht.

Vorzugsweise weist der zweite, freie Randbereich der Membran eine Quererstreckung auf, die zumindest einer halben Umfangserstreckung einer Innenwandung des ersten Leitungsabschnitts entspricht.

Eine weitere bevorzugte Ausführungsform zeichnet sich dadurch aus, dass durch den in dem Schlitz aufgenommenen ersten Randabschnitt der Membran eine Faltlinie definiert ist, um die die Membran aus der ersten Position in die zweite Position und umgekehrt klappbar ist.

Dabei ist vorgesehen, dass in der zweiten Position der flexiblen Membran eine Außenfläche der Membran den Strömungsquerschnitt verschließend an einem Innenwandabschnitt des ersten Leitungsabschnitts umfangsseitig anliegt. In der ersten Position liegt der zweite, freie Randabschnitt zumindest bereichsweise an einem unteren Innenwandabschnitt des ersten Leitungsabschnitts an.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung eines Unterdruck-Abwassersystems,
- Fig. 2: eine Seitenansicht einer Rückstaueinrichtung,
- Fig. 3: eine Seitenansicht der Rückstaueinrichtung in Schnittdarstellung mit einer Membran in erster Position,
- Fig. 4: eine Vorderansicht der Rückstaueinrichtung mit Membran in erster Position,
- Fig. 5: eine Rückansicht der Rückstaueinrichtung mit Membran in erster Position,
- Fig. 6: eine Seitenansicht der Rückstaueinrichtung in Schnittdarstellung mit der Membran in zweiter Position,
- Fig. 7: eine Vorderansicht der Rückstaueinrichtung mit Membran in zweiter Position und
- Fig. 8: eine Rückansicht der Rückstaueinrichtung mit Membran in zweiter Position.

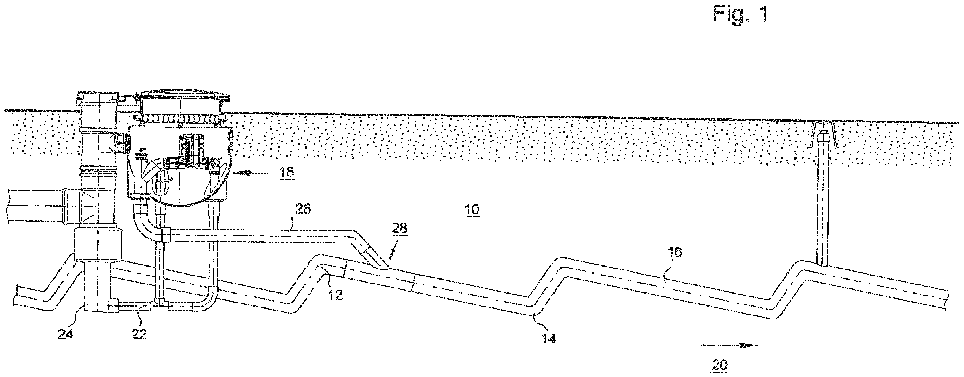

Fig. 1 zeigt rein schematisch einen Abschnitt eines Unterdruckabwassersystems 10, umfassend eine sägezahnförmige, also Hochpunkte 12 und Tiefpunkte 14 aufweisende Unterdruckleitung 16, die mit einer Vielzahl von Hausanschlüssen 18 verbindbar ist.

Im Ausführungsbeispiel wird das Abwasser in Richtung des Pfeils 20 transportiert. Die Unterdruckleitung 16 setzt sich dabei aus Abschnitten unterschiedlichen Höhenprofils zusammen, um in einen nicht dargestellten Hauptsammelbehälter zu münden, von dem das Abwasser einer Kläranlage zugeführt wird. Der Hausanschluss 18 ist über eine Leitung 22 mit einem Sammelbehälter 24 verbunden, in dem Abwasser von einem oder mehreren Häusern gesammelt wird. Ausgangsseitig ist der Hausanschluss 18 über eine Anschlussleitung 26 mit einer Rückstaueinrichtung 28 verbunden.

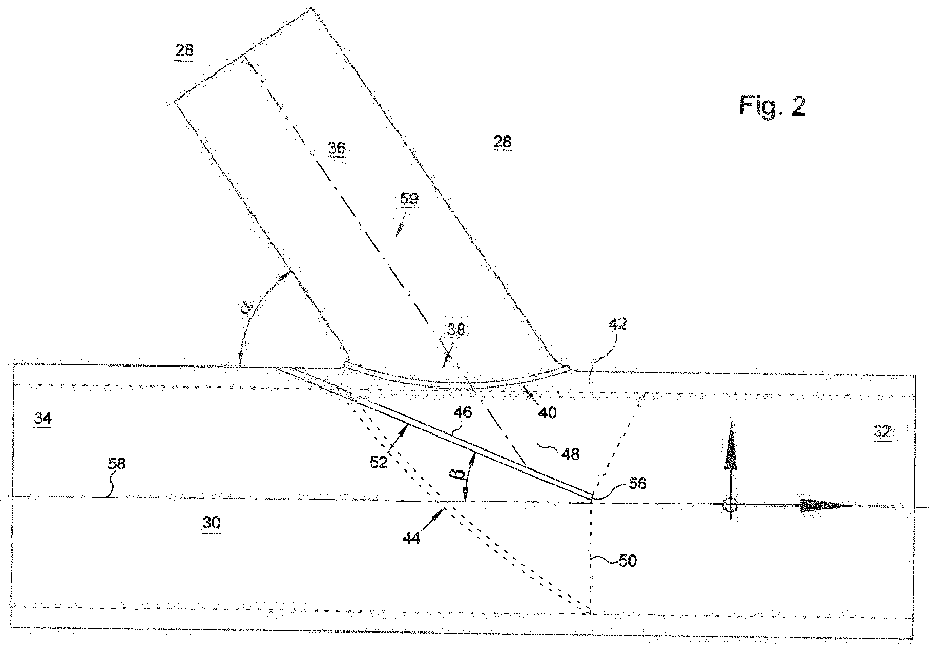

Diese ist in Fig. 2 dargestellt und weist einen ersten Leitungsabschnitt 30 auf, der mit einem stromabwärts gelegenen Abschnitt 32 und einem stromaufwärts gelegenen Abschnitt 34 in die Unterdruckleitung 16 eingeschleift ist. Ferner umfasst die Rückstaueinrichtung 28 einen zweiten Leitungsabschnitt 36, der mit der Hausanschlussleitung 26 verbunden ist.

Der zweite Leitungsabschnitt 36 erstreckt sich von dem ersten Leitungsabschnitt 30 in einem Winkel α, der bezogen auf den stromabwärts gelegene Abschnitt 34 einen spitzen Winkel bildet und mündet mit einer Querschnittsöffnung 38 in einer Einmündung 40 in einer Seitenwandung 42 des ersten Leitungsabschnitts 30. Die Einmündung 40 ist zwischen dem stromaufwärts gelegenen Abschnitt 34 und dem stromabwärts gelegenen Abschnitt 32 des ersten Leitungsabschnitts 30 angeordnet. Der zweite Leitungsabschnitt 36 ist mit dem ersten Leitungsabschnitt 30 verbunden wie verschweißt. Die Leitungsabschnitte 30, 36 bestehen aus Polyethylen (PE).

Gemäß der Erfindung weist die Rückstaueinrichtung 28 eine flexible Membran 44 auf, die einen ersten Randabschnitt 46 aufweist, mit dem die Membran 44 mit einer Innenwandung 48 des ersten Leitungsabschnitts 30 scharnierlos verbunden ist. Ferner weist die Membran 44 einen zweiten, frei beweglichen Randabschnitt 50 auf, der stromabwärts gerichtet ist.

Bei dem in Fig. 2 dargestellten Ausführungsbeispiel ist der erste Randabschnitt 46 der Membran in einem Schlitz 52 aufgenommen und durch Verschweißen fixiert. Der Schlitz 52 erstreckt sich in dem ersten Leitungsabschnitt 30 ausgehend von einer bezogen auf die Strömungsöffnung 40 stromaufwärts gelegenen Position 54 bis zu einer bezogen auf die Strömungsöffnung 40 stromabwärts gelegenen Position 56. Dabei wird durch den Schlitz 52 eine Ebene aufgespannt, die die senkrecht zu einer von Mittelachsen 58, 59 der Leitungsabschnitte 30, 36 aufgespannten Ebene und bezogen zu der in x-Richtung verlaufenden Mittelachse 58 des ersten Leitungsabschnitts 30 einen Winkel β einschließt, der etwa 20° beträgt. Dabei liegt die stromabwärts gelegene Position 56 des Schlitzes 52 auf der Mittelachse 58.

Die Membran 44 ist als Gummi-Membran ausgebildet, wobei der Schlitz 52 eine Faltlinie bildet, entlang der die Gummi-Membran 44 entsprechend eines Strömungsdruckes entweder in die erste oder in die zweite Position klappt und aufgrund einer Eigenspannung in dieser Position verweilt. In der ersten Position liegt der frei bewegliche Randabschnitt 50 der Membran 44 zumindest abschnittsweise an einer Innenwandung des ersten Leitungsabschnitts 30 an, so dass der Strömungsquerschnitt 60 zumindest bereichsweise verschlossen ist.

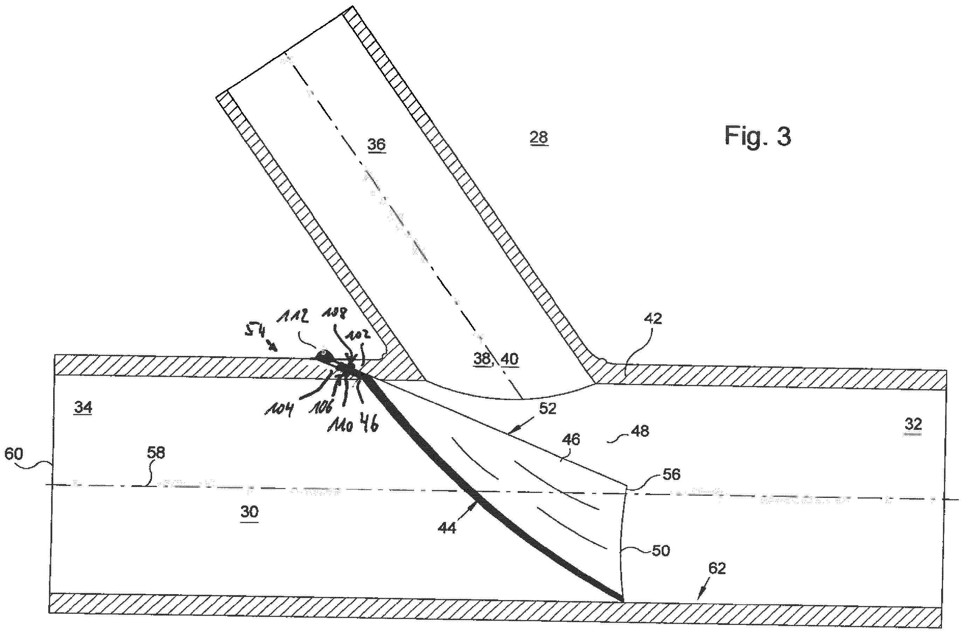

Fig. 3 zeigt eine Seitenansicht der Rückstaueinrichtung in Schnittdarstellung, wobei sich die Membran 44 in einer ersten Position befindet, in der die von dem ersten Leitungsabschnitt 30 aufgespannte Querschnittsfläche 60 im Wesentlichen verschlossen ist.

Die Membran 44 ist mit ihrem umlaufenden Randabschnitt 46 in dem Schlitz 52 fixiert. Der Schlitz 52 wird durch einen Schrägschnitt in dem ersten Leitungsabschnitt 30 gebildet. In gegenüber liegenden Schnittflächen 102, 104 der Leitungswandabschnitte sind jeweils zumindest eine Nut 106, 108 umlaufend eingebracht. Der umlaufende Randabschnitt 46 weist einen Wulst 110 auf, der in den angrenzenden Nuten 106, 108 aufgenommen ist. Zur Fixierung des umlaufenden Randabschnitts 46 in dem Schlitz 52 werden die an dem Schlitz 52 aneinander grenzenden Leitungswandabschnitte miteinander verschweißt. Die Verschweißung erfolgt mittels einer Schweißnaht 112, die außenseitig entlang des Schlitzes 52 unter gleichzeitiger Druckbeaufschlagung der angrenzenden Leitungswandabschnitte aufgebracht wird.

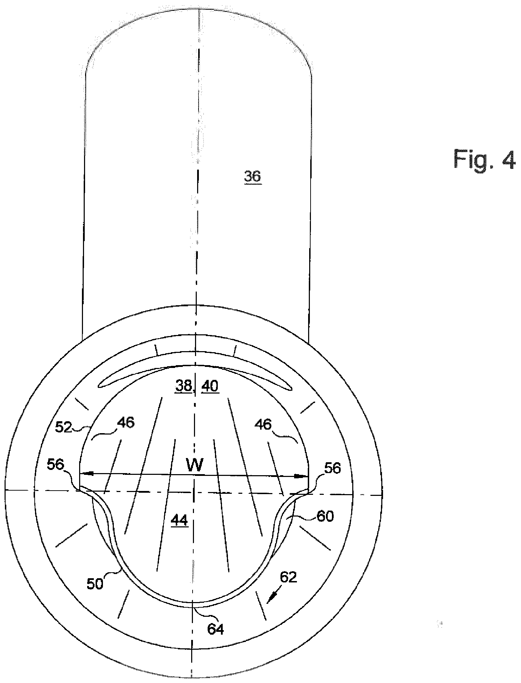

Fig. 4 zeigt eine Vorderansicht der Rückstaueinrichtung 28, wobei sich die Membran 44 in erster Position befindet, d. h., der Strömungsquerschnitt 60 verschlossen und der Strömungsquerschnitt 40 des zweiten Leitungsabschnittes 36 freigegeben ist.

Fig. 4 zeigt, dass eine Quererstreckung der Membran 44 größer ist als lichte Weite W des ersten Leitungsabschnitts 30, so dass der frei bewegliche Rand 50 der Membran 44 ausgehend von der Faltlinie im Wesentlichen eine U-Form bildet, wobei zumindest ein unterer Abschnitt 64 des freien Randes 50 der Membran an der Innenwandung 62 des ersten Leitungsabschnitts 30 anliegt.

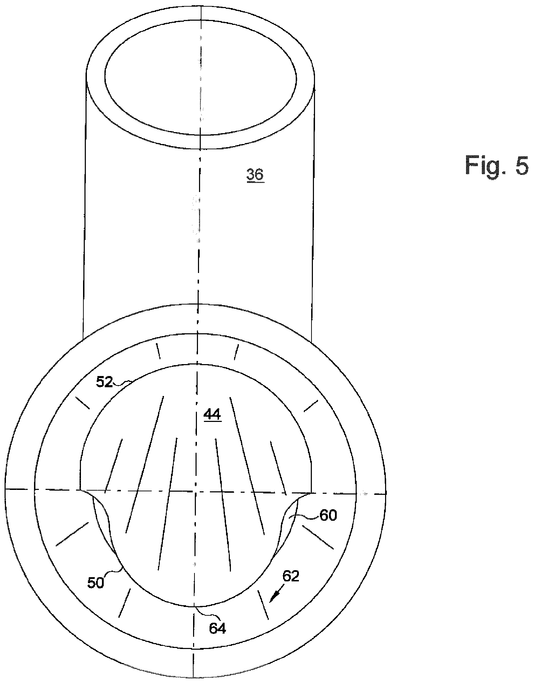

Fig. 5 zeigt eine Rückansicht der Rückstaueinrichtung 28 mit Membran 44 in erster Position, wobei strömungsquerschnitt 60 verschlossen und Randbereich 64 der Membran 44 an unterer Innenwandung 62 des ersten Leitungsabschnittes 30 anliegt.

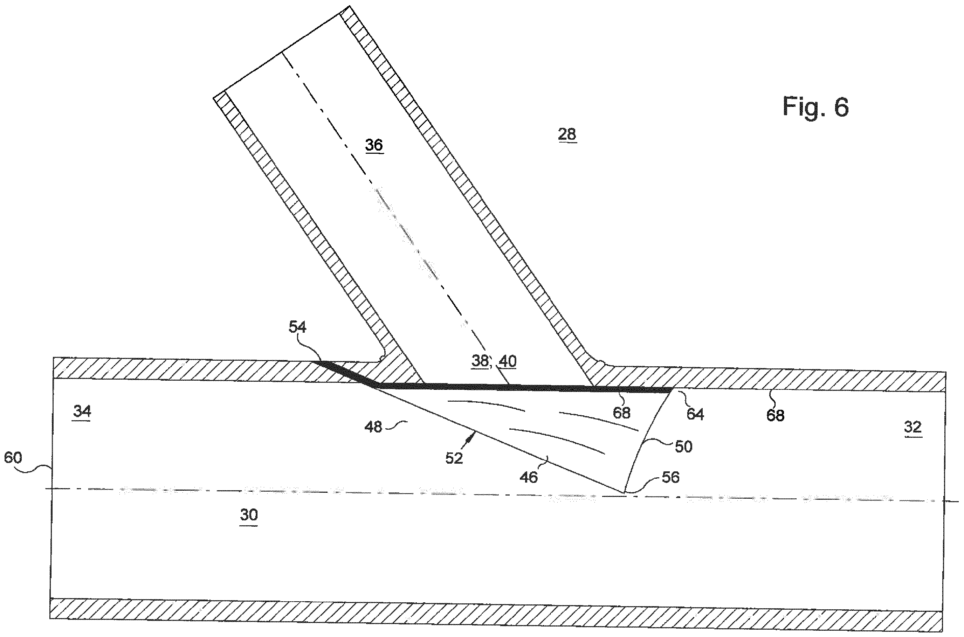

Fig. 6 zeigt eine Seitenansicht der Rückstaueinrichtung 28, wobei sich die Membran 44 in zweiter Position befindet, d. h. Freigabe des Strömungsquerschnittes 60 und Verschluss des Strömungsquerschnitts 40 des zweiten Leitungsabschnittes 36. In zweiter Position ist der freie Randabschnitt 50 in Richtung einer oberen Innenwandabschnitts 66 geklappt, wobei eine Außenfläche 68 der Membran vorzugsweise flächig an dem Innenwandabschnitt 66 des ersten Leitungsabschnittes 30 anliegt.

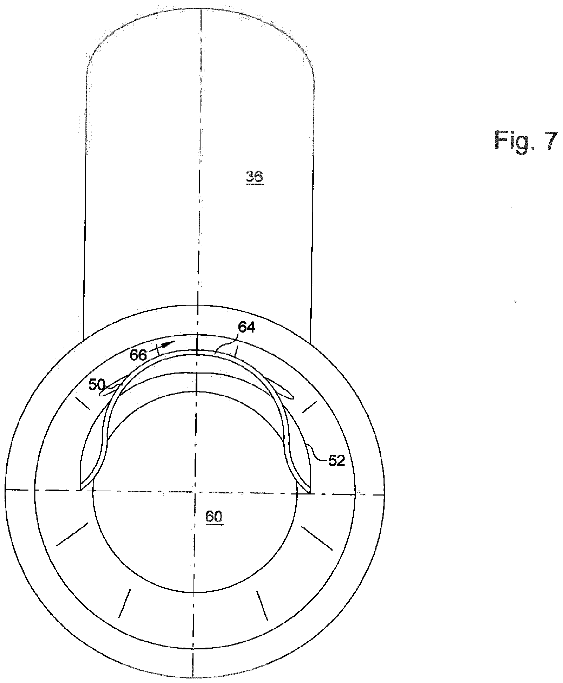

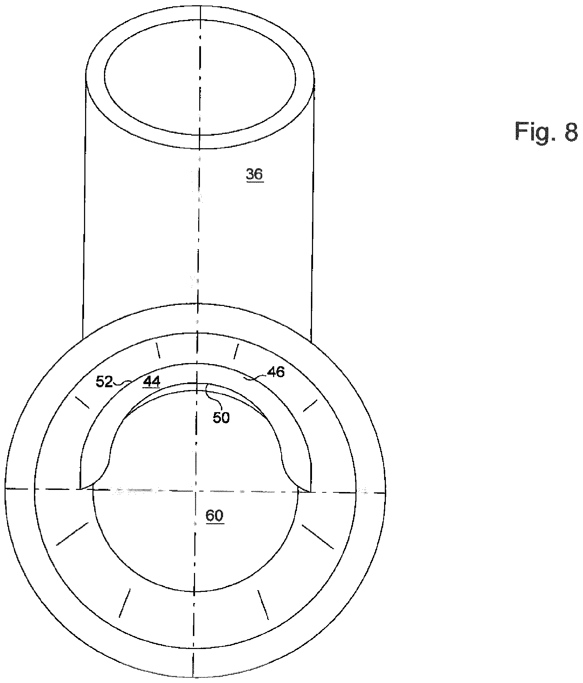

Fig. 7 und 8 zeigen jeweils Vorder- und Rückansicht der Rückstaueinrichtung 28, wobei sich die Membran 44 in zweiter Position befindet und den Strömungsquerschnitt 60 im Wesentlichen freigegeben ist.

Gemäß der Erfindung wird die flexible Membran stromaufwärts vor der Strömungsöffnung 40, d. h. der Einmündung des zweiten Leitungsabschnittes 36, in den ersten Leitungsabschnitt 30 integriert. Die flexible Membran erfüllt dadurch gleichzeitig zwei Aufgaben, nämlich, dass bei Eintritt des Abwassers durch die Hausanschlussleitung 26 und den zweiten Leitungsabschnitt 36 in Richtung des stromabwärts gelegenen Abschnitts 32 die Membran 44 nach unten, d. h. in erste Position geklappt wird, so dass ein Rückfluss versperrt ist und dass die komplette Abwassermenge mit der zusätzlichen Luftportion gezielt in Richtung der Vakuumstation geleitet wird.

Sollte das Abwasser von dem stromaufwärts gelegenen Abschnitt 34 zu dem stromabwärts gelegenen Abschnitt 32 fließen, d. h., an dem zweiten Leitungsabschnitt 36 vorbei, so wird die flexible Membran nach oben, d. h. in zweite Position geklappt, und die Strömungsöffnung 40 zur Hausanschlussleitung verschlossen, so dass ein Stoß zum Hausanschlussschacht verhindert wird.

Durch die flexible Membran wird gegenüber dem Stand der Technik der Vorteil erreicht, dass auf eine mechanische Lagerung wie Scharnier einer festen Klappe mittels Lagerstift verzichtet werden kann. Dadurch werden Störungsfälle verringert und die Wartung vereinfacht.

Des Weiteren wird der Vorteil erreicht, dass im Schadensfall, d. h. bei Abriss der flexiblen Membran diese in stromabwärts gelegenen Systemen weniger Schaden anrichtet als eine feste Klappe, die zur Zerstörung von Pumpen führen kann.

## Patentansprüche

1. Rückstau-Einrichtung (28) geeignet zur Installation in einem Unterdruckabwassersystems (10), umfassend einen ersten Leitungsabschnitt (30), der mit einem stromabwärts gelegenen Abschnitt (32) und einem stromaufwärts gelegenen Abschnitt (34) einer Unterdruckleitung (16) des Unterdruckabwassersystems (10) verbindbar ist, einen zweiten Leitungsabschnitt (36), der mit einer an die Unterdruckleitung (16) anzuschließenden Anschlussleitung (26) verbindbar ist und der sich von dem ersten Leitungsabschnitt (30) in einem spitzen Winkel α erstreckt und in einer Position zwischen dem stromabwärts gelegenen Abschnitt (32) und dem stromaufwärts gelegenen Abschnitt (34) der Unterdruckleitung (16) derart angeordnet ist, dass ein Strömungsquerschnitt (38) des zweiten Leitungsabschnitts (36) mit einer Einmündung (40) des ersten Leitungsabschnitts (30) korrespondiert, wobei die Rückstau-Einrichtung ferner ein bewegliches Rückstauelement (44) aufweist, das durch eine stromabwärts gerichtete Strömung in dem zweiten Leitungsabschnitt (36) in eine erste Position bringbar ist, in der ein Strömungsquerschnitt (60) des ersten Leitungsabschnitts (30) zur Vermeidung eines Rückflusses in den stromaufwärts gelegenen Abschnitt (34) verschlossen ist. und durch eine stromabwärts gerichtete Strömung in dem ersten Leitungsabschnitt in eine zweite Position bringbar ist, in der der Strömungsquerschnitt (38) des zweiten Leitungsabschnitts (36) zur Vermeidung eines Rückflusses von Abwasser in den zweiten Leitungsabschnitt (36) verschlossen ist, wobei das Rückstauelement (44) als flexible Membran (44) ausgebildet und mit einem ersten Randabschnitt (46) scharnierlos in einem Schlitz (52) eines Wandabschnitts (48) des ersten Leitungsabschnitts (30) aufgenommen ist und wobei die flexible Membran (44) einen zweiten, freien Randabschnitt (50) aufweist, der zwischen der ersten Position und der zweiten Position frei beweglich ist,
**dadurch gekennzeichnet,**
**dass** der Schlitz (52) bezogen auf eine Mittelachse (58) des ersten Leitungsabschnitts (30) schräg in dem Wandabschnitt (48) verläuft und dass die Membran (44) durch Verschweißen des Schlitzes (52) mittels einer außenliegenden Schweißnaht (112) in dem ersten Leitungsabschnitt (30) fixiert ist.

2. Rückstau-Einrichtung nach Anspruch 1,
**dadurch gekennzeichnet**,
der Schlitz (52) als Schrägschnitt ausgebildet ist, ausgehend von einer bezogen auf den Strömungsquerschnitt (38) stromaufwärts gelegenen Position (54) zu einer bezogen auf den Strömungsquerschnitt (38) stromabwärts gelegenen Position (56), wobei die stromabwärts gelegene Position (56) auf der Mittelachse (58) des ersten Leitungsabschnitts (30) liegt.

3. Rückstau-Einrichtung nach Anspruch 1 oder 2,
**dadurch gekennzeichnet,**
**dass** eine von dem Schlitz (52) aufgespannte Ebene bezogen auf die Mittelachse (58) in einem Winkel β im Bereich von 15° ≤ β ≤ 45°, vorzugsweise β = 20° verläuft.

4. Rückstau-Einrichtung nach Anspruch 1,
**dadurch gekennzeichnet,**
**dass** der erste Randabschnitt (46) der flexiblen Membran (44) einen Wulst (110) aufweist, der in jeweils einer Nut (106, 108) in angrenzenden Schnittflächen (102, 104) des Schlitzes (52) aufgenommen ist.

5. Rückstau-Einrichtung nach zumindest einem der vorhergehenden Ansprüche,
**dadurch gekennzeichnet,**
**dass** die Membran (44) bezogen auf die Mittelachse (58) des ersten Leitungsabschnitts (30) eine Quererstreckung aufweist, die größer ist als eine lichte Weite W des ersten Leitungsabschnitts (30).

6. Rückstau-Einrichtung nach einem der vorhergehenden Ansprüche,
**dadurch gekennzeichnet,**
**dass** die flexible Membran (44) eine im Wesentlichen U-förmige Fläche (52) aufweist.

7. Rückstau-Einrichtung nach einem der vorhergehenden Ansprüche,
**dadurch gekennzeichnet,**
**dass** die flexible Membran (44) aus einem elastischen Material wie Silicon oder Gummi, vorzugsweise aus Ethylen-Propylen-Dien-Kautschuk (EPDM) ausgebildet ist.

8. Rückstau-Einrichtung nach einem der vorhergehenden Ansprüche,
**dadurch gekennzeichnet,**
**dass** der zweite, freie Randabschnitt (50) der Membran (44) eine Quererstreckung aufweist, die zumindest einer halben Umfangserstreckung einer Innenwandung des ersten Leitungsabschnitts (30) entspricht.

9. Rückstau-Einrichtung nach Anspruch 1,
**dadurch gekennzeichnet,**
**dass** durch den in dem Schlitz (52) aufgenommenen ersten Randabschnitt der Membran (44) eine Faltlinie definiert ist, um die die Membran (44) aus der ersten Position in die zweite Position und umgekehrt klappbar ist.

10. Rückstau-Einrichtung nach einem der vorhergehenden Ansprüche,
**dadurch gekennzeichnet,**
**dass** die flexible Membran (44) in der zweiten Position mit einer Außenfläche (68) umfangsseitig an einem Innenwandabschnitt (66) des ersten Leitungsabschnitts (30) anliegt und den Strömungsquerschnitt (38) verschließt.

11. Rückstau-Einrichtung nach einem der vorhergehenden Ansprüche,
**dadurch gekennzeichnet,**
**dass** die flexible Membran (44) in der ersten Position mit ihrem zweiten, freien Randabschnitt (50) zumindest bereichsweise an einem unteren Innenwandabschnitt (62) des ersten Leitungsabschnitts (30) anliegt und den Strömungsquerschnitt (60) des ersten Leitungsabschnitts (30) verschließt.

12. Rückstau-Einrichtung nach einem der vorhergehenden Ansprüche,
**dadurch gekennzeichnet,**
**dass** der erste und zweite Leitungsabschnitt (30, 36) aus Polyethylen bestehen.

13. Rückstau-Einrichtung nach einem der vorhergehenden Ansprüche,
**dadurch gekennzeichnet,**
**dass** der Schlitz (52) unter Druckbeaufschlagung auf die angrenzenden Schnittflächen (102, 104) verschweißt ist.

## Claims

1. Backflow prevention device (28) suitable for installing in a vacuum sewer system (10) comprising a first pipe section (30), which can be connected to a downstream-situated section (32) and an upstream-situated section (34) of a vacuum pipe (16) of the vacuum sewer system (10), a second pipe section (36), which can be connected to a connecting pipe (26) to be connected to the vacuum pipe (16) and which extends from the first pipe section (30) at an acute angle α and is arranged between the downstream-situated section (32) and the upstream-situated section (34) of the vacuum pipe (16) in such a way that a flow cross section (38) of the second pipe section (36) corresponds with a confluence (40) of the first pipe section (30), wherein the backflow prevention device further has a movable backflow prevention element (44) which can be brought by a downstream-directed flow in the second pipe section (36) into a first position in which a flow cross section (60) of the first pipe section (30) is sealed to prevent a backflow into the upstream-situated section (34), and which can be brought by a downstream-directed flow in the first pipe section into a second position in which the flow cross section (38) of the second pipe section (36) is sealed to prevent a backflow of waste water into the second pipe section (36), wherein the backflow prevention element (44) is designed as a flexible membrane (44) and is accommodated without hinges by means of a first edge section (46) in a slot (52) of a wall section (48) of the first pipe section (30), and whereby the flexible membrane (44) has a second, free edge section (50) which is freely movable between the sais first position and the said second position,
**characterized in that**
the slot (52) runs at an angle in the wall section (48) relative to a central axis (58) of the first pipe section (30) and that the membrane (44) is fixed in the first pipe section (30) by welding closed the slot (52) by means of an external welding seam (112).

2. Backflow prevention device according to Claim 1,
**characterized in that**
the slot (52) is designed as a diagonal cut starting from a position (54) situated upstream relative to the flow cross section (38) to a position (56) situated downstream relative to the flow cross section (38), wherein the downstream-situated position (56) lies on the central axis (58) of the first pipe section (30).

3. Backflow prevention device according to Claim 1 or 2,
**characterized in that**
a plane extending from the slot (52) runs at an angle β in the range 15° ≤ β ≤ 45°, preferably β = 20°, relative to the central axis (58).

4. Backflow prevention device according to Claim 1,
**characterized in that**
the first edge section (46) of the flexible membrane (44) has a bead (110) which is in each case accommodated in a groove (106, 108) in adjacent cut surfaces (102, 104) of the slot (52).

5. Backflow prevention device according to at least one of the preceding claims,
c**haracterized in that**
the membrane (44) has a transverse extension relative to the central axis (58) of the first pipe section (30) which is greater than an internal width W of the first pipe section (30).

6. Backflow prevention device according to one of the preceding claims, **characterized in that**
the flexible membrane (44) has a substantially U-shaped surface (52).

7. Backflow prevention device according to one of the preceding claims,
**characterized in that**
the flexible membrane (44) is made from an elastic material such as silicone or rubber, preferably ethylene propylene diene monomer (EPDM).

8. Backflow prevention device according to one of the preceding claims,
**characterized in that**
the second, free edge section (50) of the membrane (44) has a transverse extension which corresponds to at least half of the circumferential extension of an internal wall of the first pipe section (30).

9. Backflow prevention device according to Claim 1,
**characterized in that**
a fold line, about which the membrane (44) can be folded from the first position into the second position and vice versa, is defined by the first edge section of the membrane (44) accommodated in the slot (52).

10. Backflow prevention device according to one of the preceding claims,
**characterized in that**
in its second position, the flexible membrane (44) rests with an external surface (68) circumferentially on an internal wall section (66) of the first pipe section (30) and seals the flow cross section (38).

11. Backflow prevention device according to one of the preceding claims,
**characterized in that**
in its first position, the flexible membrane (44) rests at least in some areas with its second, free edge section (50) on a lower internal wall section (62) of the first pipe section (30) and seals the flow cross section (60) of the first pipe section (30).

12. Backflow prevention device according to one of the preceding claims,
**characterized in that**
the first and second pipe section (30, 36) are made of polyethylene.

13. Backflow prevention device according to one of the preceding claims,
**characterized in that**
the slot (52) is welded closed when pressure is applied to the adjacent cut surfaces (102, 104).

## Revendications

1. Dispositif de retenue (28) adapté pour être installé dans un système d'assainissement sous vide (10), comprenant un premier tronçon de canalisation (30) qui peut être relié à un tronçon situé en aval (32) et à un tronçon situé en amont (34) d'une conduite à dépression (16) du système d'assainissement sous vide (10), un second tronçon de canalisation (36) qui peut être relié à une conduite de raccordement (26) à raccorder à la conduite à dépression (16) et qui s'étend du premier tronçon de canalisation (30) dans un angle aigu α et est disposé dans une position comprise entre le tronçon situé en aval (32) et le tronçon situé en amont (34) de la conduite à dépression (16) de telle sorte qu'une section d'écoulement (38) du second tronçon de canalisation (36) correspond à une embouchure (40) du premier tronçon de canalisation (30), sachant que le dispositif de retenue présente également un élément de retenue mobile (44) qui peut être amené dans une première position par un écoulement orienté vers l'aval dans le second tronçon de canalisation (36) dans laquelle position une section d'écoulement (60) du premier tronçon de canalisation (30) est fermée pour empêcher un reflux dans le tronçon situé en amont (34), et qui peut être amené dans une seconde position par un écoulement orienté vers l'aval dans le premier tronçon de canalisation, dans laquelle position la section d'écoulement (38) du second tronçon de canalisation (36) est fermée pour éviter un reflux des eaux usées dans ledit second tronçon de canalisation (36), sachant que l'élément de retenue (44) est conçu sous forme de membrane souple (44) et est logé, sans charnière, par le biais d'une première partie périphérique (46) dans une fente (52) d'une portion de paroi (48) du premier tronçon de canalisation (30) et sachant que la membrane souple (44) présente une seconde partie périphérique libre (50) qui bouge librement entre ladite première et ladite seconde position,
**caractérisé en ce**
**que** la fente (52) s'étend de manière inclinée dans la portion de paroi (48) par rapport à un axe médian (58) du premier tronçon de canalisation (30) et que la membrane (44) est fixée dans le premier tronçon de canalisation (30) par soudage de la fente (52) au moyen d'un cordon de soudure situé à l'extérieur (112).

2. Dispositif de retenue selon la revendication 1,
**caractérisé en ce**
**que** la fente (52) est conçue sous forme de coupe inclinée, partant d'une position située en amont (54) par rapport à la section d'écoulement (38) et allant jusqu'à une position située en aval (56) par rapport à la section d'écoulement (38), sachant que la position située en aval (56) se situe sur l'axe médian (58) du premier tronçon de canalisation (30).

3. Dispositif de retenue selon la revendication 1 ou 2,
**caractérisé en ce**
**qu'**un plan sous-tendu par la fente (52) s'étend, par rapport à l'axe médian (58), selon un angle β tel que 15° ≤ β ≤ 45°, de préférence β = 20°.

4. Dispositif de retenue selon la revendication 1,
**caractérisé en ce**
**que** la première partie périphérique (46) de la membrane souple (44) présente un bourrelet (110) qui est logé respectivement dans une rainure (106, 108) dans des surfaces de coupe adjacentes (102, 104) de la fente (52).

5. Dispositif de retenue selon au moins une des revendications précédentes,
**caractérisé en ce**
**que** la membrane (44) présente, par rapport à l'axe médian (58) du premier tronçon de canalisation (30), une étendue transversale qui est supérieure au diamètre intérieur W du premier tronçon de canalisation (30).

6. Dispositif de retenue selon une des revendications précédentes,
**caractérisé en ce**
**que** la membrane souple (44) présente une surface essentiellement en forme de U (52).

7. Dispositif de retenue selon une des revendications précédentes,
**caractérisé en ce**
**que** la membrane souple (44) est constituée d'un matériau élastique tel que du silicone ou du caoutchouc, de préférence du caoutchouc éthylène-propylène-diène (EPDM).

8. Dispositif de retenue selon une des revendications précédentes,
**caractérisé en ce**
**que** la seconde partie périphérique libre (50) de la membrane (44) présente une étendue transversale qui correspond au moins à une demi-étendue circonférentielle d'une paroi intérieure du premier tronçon de canalisation (30).

9. Dispositif de retenue selon la revendication 1,
**caractérisé en ce**
**qu'**une ligne de pliage est définie par la première partie périphérique de la membrane (44) logée dans la fente (52), autour de laquelle ligne la membrane (44) peut être rabattue de la première position à la deuxième position et inversement.

10. Dispositif de retenue selon une des revendications précédentes,
**caractérisé en ce**
**que** la membrane souple (44) dans sa seconde position repose par une surface extérieure (68) côté circonférentiel sur une portion de la paroi intérieure (66) du premier tronçon de canalisation (30) et ferme ainsi la section d'écoulement (38).

11. Dispositif de retenue selon une des revendications précédentes,
**caractérisé en ce**
**que** la membrane souple (44) dans sa première position repose par sa seconde partie périphérique libre (50) au moins partiellement sur une portion inférieure de la paroi intérieure (62) du premier tronçon de canalisation (30) et ferme ainsi la section d'écoulement (60) du premier tronçon de canalisation (30).

12. Dispositif de retenue selon une des revendications précédentes,
**caractérisé en ce**
**que** le premier et le second tronçon de canalisation (30, 36) sont constitués de polyéthylène.

13. Dispositif de retenue selon une des revendications précédentes,
**caractérisé en ce**
**que** la fente (52) est soudée sur les surfaces de coupe adjacentes (102, 104) par application d'une pression.
